**Europäisches Patentamt**

**European Patent Office**

**Office européen des brevets**

(11) Publication number: **0 128 922**
**B1**

# EUROPEAN PATENT SPECIFICATION

(45) Date of publication of patent specification: **18.10.89**

(51) Int. Cl.⁴: **G 01 N 23/02, G 01 N 23/04**

(21) Application number: **84900098.9**

(22) Date of filing: **16.12.83**

(86) International application number:
**PCT/HU83/00062**

(87) International publication number:
**WO 84/02399 21.06.84 Gazette 84/15**

(54) A METHOD FOR PRODUCING THE RADIOLOGICAL IMAGE OF AN OBJECT, PREFERABLY FOR USE IN MATERIAL TESTING, AND A MEANS FOR ITS PERFORMANCE.

(30) Priority: **16.12.82 HU 406482**

(43) Date of publication of application:
**27.12.84 Bulletin 84/52**

(45) Publication of the grant of the patent:
**18.10.89 Bulletin 89/42**

(84) Designated Contracting States:
**AT BE CH DE FR GB LI NL SE**

(56) References cited:
**GB-A- 961 868**
**GB-A-1 272 404**
**US-A-4 064 440**

**Materials Evaluation, Feb. 77, pages 32-34**

(73) Proprietor: **Teleki, Péter**
**Bocskai u. 30**
**H-2400 Dunaujvaros (HU)**

(72) Inventor: **Teleki, Péter**
**Bocskai u. 30**
**H-2400 Dunaujvaros (HU)**

(74) Representative: **Gold, Tibor Zoltán et al**
**T.Z. GOLD & COMPANY, 9 Staple Inn**
**London WC1V 7QH (GB)**

Courier Press, Leamington Spa, England.

## Description

The present invention concerns, in one aspect thereof, a radiographic imaging system and, in another aspect thereof a method of determining periodic discontinuities of a rotating object employing radiographic imaging.

In the field of examination and non-destructive testing of solid objects it is known to employ radiographic imaging techniques using gamma ray or X-ray sources of radiation to produce images of selected cross-sections of the solid bodies for the purpose of detecting flaws or to reveal concealed cross-sectional shapes. One particular industrial application of radiographic imaging systems is the measurement of the wall thickness of annular bodies such as pipes.

In the course of measuring the wall thickness of a pipe a source of X-rays or a source of gamma rays such as a radioactive isotope or a particule accelerator is utilised in a transmission radiological process in which the radiation that has passed through the specimen or workpiece under examination is caused to pass through radiological film material and an image is thus obtained of the cross-section of the specimen or workpiece which represents projections of the cross-section of the latter. These projections may be measured directly when due account is taken of the magnification factor and thus the material thickness associated with a given projection can be determined, if necessary with the aid of appropriate instruments.

One known technique of this kind in which an attempt has been made to reduce scattered radiation from an object being radiographed is the use of a Potter-Bucky diaphragm. This apparatus consists of a moving grid, composed of lead strips held in position by intervening strips of material transparent to X-rays. The lead strips are tilted, so that the plane of each is in line with the focal spot of the tube. The slots between the lead strips are several times as deep as they are wide. The parallel lead strips have the function of absorbing the very divergent scatter rays from the object being radiographed, so that most of the exposure is made by the primary rays emanating from the focal spot of the tube and passing between the lead strips. During the course of the exposure, the grid is oscillated in a plane parallel to the film so that the shadows of the lead strips are blurred to the point that they do not appear in a final radiograph.

Such an apparatus is described in "Non-destructive Testing Handbook", Volume 3, Radiography and Radiation Testing, (Lawrence E. Bryant, Technical Editor and Paul McIntire, Editor) 2nd Edition. Although this document was published after the priority date of the present application, the Potter-Bucky diaphragm technique is known from before that priority date, e.g. from an earlier edition of this book.

The problem involved in the Potter-Bucky diaphragm type imaging systems as well as with all other known imaging systems is that the cross-sectional projections of the object being imaged differ greatly in size. For instance, if one takes a pipe of 324 mm. internal diameter and 10 mm. wall thickness, then the projections vary as follows:

| Depth | Projection |
| --- | --- |
| 0.5 mm | 25.44 mm |
| 1.0 mm | 35.94 mm |
| 1.5 mm | 44.00 mm |
| 2.0 mm | 50.75 mm |
| 9.5 mm | 103.32 mm |
| 10.0 mm | 112.07 mm |
| 25.0 mm | 41.23 mm |
| centre point | 20.00 mm |

The projection or intercept for a depth of 0.4 mm has approximately the same value as the one for the centre.

In practice, with an image obtained in this way the actually appreciable or visible wall thickness is only about 3 mm., and the rest is indeterminate. The problem is made even worse by the fact that the length of the projections increases as one goes further away along the axis of the pipe from the centre of the beam of radiation. Thus, for instance, at a depth of 10 mm, if the inclination to the main or central beam is 30° the value of the projection or intercept is 129.41 mm. The use of compensating blocks or stepped wedges is known from the traditional or conventional examination of weld seams but such devices cannot be regulated entirely as desired, and their projections on film cannot be calculated with the appropriate accuracy and desired speed. It was thought that it would be possible to image etalon on the same film as the specimen e.g. by boring various holes of known depth into a plate, in the expectation that the blackening or darkening of these bores projected onto the film would be directly proportional with the depths of the bores. However, this hypothesis was found to be faulty in practice because the scattered radiation reflected from the walls of the bores increased the actual blackenings. In the February 1977 issue of "Materials Evaluation", p. 32, R. P. Krolicki published an article describing various kinds of blocks. The author describes accurately calibrated reference lead masses as blocks which are then projected onto the film and the actual wall thickness is determined by the measurable wall shadows and the associated block shadows. With this method wall thicknesses of approximately 20 mm. could be measured for pipes with diameters of approximately 250 to 300 mm. However this method required the distance between the film and the source of the radiation to be as large as possible.

This method has several disadvantages and problems, e.g. problems due to scattered radiation and cannot solve the problem of imaging onto a single film cross-sectional projections of a pipe which are independent of the parameters of the pipe and which are proportionate to each other according to some known function.

The present invention seeks to overcome the above disadvantages. The invention is based on the discovery or recognition that if a plurality of thin metal foils are placed immediately in front of the recording medium or film then the blackening on the film does not vary linearly with the thickness of the overall package or the equivalent thickness of a unitary piece of material, but rather varies in a non-linear matter so as to cause a relative increase in the measurement range of the medium or film.

According therefore to one aspect of the present invention there is provided a radiographic imaging system which comprises a source of X-rays or gamma rays for imaging a specimen arranged at least partially in the path of the rays and having a shape and/or internal configuration to be tested by means of a selective attenuation of the rays transmitted therethrough; the system comprising image detecting means having a surface arranged in the path of the transmitted rays, the image detecting means having a predetermined sensitivity range within which differences in the intensities of differently attenuated ones of said rays generate distinguishable responses; and an array of laminated metallic elements are arranged between the image detecting means and the specimen, the angle of incidence on the array of the said rays lying between 0° and 60°. The invention is characterised in that the array is composed of a package of thin, at least partially radiation-transmitting, mutually parallel metallic foils arranged continuously with and parallel to the surface of said image detecting means and transversely to the path of said transmitted rays for modifying the detected image of said specimen in such a non-linear way that the presence of said structure corresponds to a first equivalent material thickness of the material of the specimen when said response is considered at the minimum path length of said rays in said specimen, and to a substantially smaller thickness when said response is considered at a maximum path length of said rays in said specimen.

According to another aspect of the invention, there is provided a method of determining periodic discontinuities of a rotating object running with a predetermined speed, comprising the steps of: covering a circular surface of said object with a film sensitive to gamma-rays or X-rays, contiguously covering said film with a laminated structure of a package of thin, mutually parallel metallic foils to form an assembly, irradiating the thus obtained assembly by rays from a source of gamma rays or X-rays propagating in a direction substantially normal to the axis of rotation of said object to expose said film through said structure; and developing said film.

The preferred foils are lead foils and their number in the structure may vary between about 40 to 480.

When there are at least three foils present, they may have a density at least equal to that of the material of the specimen. The foils need not, of course, be of the same material as the specimen body or workpiece and within the package, the material of the metallic foils may vary. That is to say the individual foils together forming the package need not be made of the same material.

The foils may be attached to each other by means of a binding agent. In cases where the thickness of the individual foils is very small and therefore there is the risk of insufficient mechanical strength to prevent creasing of the individual foils, each of the foils may be mounted on a carrier sheet and the laminated carrier sheets are then integrated to form the laminated structure.

In practising the invention, it is recommended that a series of experiments is performed to determine the equivalents in terms of the blackening effect on the film between the number of foils in the integrated structure and 1 mm of the thickness of the material of the specimen under test. Naturally, one must at that stage bear in mind that as the thickness increases the number of foils in the package does not increase linearly with it. Thus the number of foils for an equivalent thickness of 20 mm is not the same as twice the number of foils for a thickness of 10 mm. When the required number of foils is known, an object of known thickness can be exposed onto the film to serve on the one hand as reference and on the other hand to extend the range of "visibility" to the desired extend by changing the contrast conditions. In industrial practice an accuracy of measurement of plus or minus 0.1 to 0.5 mm. is usually sufficient. Hence in the course of the test process first the upper and lower limits of the desired visibility (material thickness) are determined together with particular regard to the distance of the selective thicknesses from the actual outer and inner surfaces of the pipe. Thus for instance for the accuracy range mentioned above, for the above mentioned pipe of 324 mm. diameter and 10 mm. wall thickness one must produce a visibility range from 25 mm. to 130 mm. A suitably formed and used combined assembly and object makes 1/250th to 1/500th part of the thickness of the material under test capable of being measured, due account being taken of the quality of the source of radiation. The formation of the shadow of the wall may also be formed with the so-called double-walled projection in which the film is laid on the cylindrical outer surface of the pipe under test.

The spacing between the film and the source of radiation has only one significant restriction, namely the desired image sharpness. From any point of the film surface the projection or intercept associated with the point of measurement can be calculated if all the parameters of the exposure and the appropriate data of the combined assembly and object as well as the diameter of the pipe are known. The characteristic shape of the curve of the projection also provides information such as eccentricity of the internal and external surfaces of the tube relative to each other, i.e. if they are not fully concentric, a matter which conventional processes could not determine.

It is well known that if during the course of a test process the specimen under test is displaced relative to the soruce, affecting the positions of the projections to be formed, then the image will be blurred or will become less sharp, and this can lead to completely spoilt films. This usually deleterious phenomenon may, however, be utilised in the method according to an aspect of this invention, e.g. to detect the amplitude of vibration of the specimen in the plane of projection. Thus the invention may serve for examining rotating structures susceptible to abnormal changes in acceleration or perturbations. Thus for instance defects or unevenesses in the rotation of a gear wheel can be detected by laying a film on the rotary surface and directing a collimated beam of gamma rays or X-rays at the film. Changes in acceleration provide white and black bands on the film differing from the otherwise uniform distribution of black bands on the film and one can make appropriate deductions about the changes in acceleration from the number and disposition of these white and black bands.

The invention will be described, merely by way of example, with reference to the accompanying drawings, wherein:

Figure 1 is a curve illustrating the non-linear equivalence between a single iron body and a package of lead foils as used in the method of the present invention;

Figure 2 is a curve illustrating the intercepts, i.e. dark strips on a film, and envelope curves, obtained in the case of imaging a tube of radius R and wall thickness S;

Figure 3 is similar to Figure 2 but shifted in the y-direction by a distance $L_m$ due to the utilisation of a plane body having the same density as the tube;

Figure 4 corresponds to Figure 3, but is modified by the use of a laminated foil package in accordance with the system of this invention;

Figure 5 illustrates the variation of the lengths of the intercepts, i.e. dark strips on a film, and envelope curves for a tube with concentric inner and outer walls; the left-hand side (A) of the Figure showing the case for a source of radiation at infinity, and the right-hand side (B) relatively close to the specimen;

Figure 6 corresponds to Figure 5 for a tube with non-concentric inner and outer walls;

Figures 7(A), (B) and (C) illustrate the method of performing the invention in three mutually orthogonal views and utilising a wedge etalon;

Figures 8(A), (B) and (C) illustrate the images obtained at an ideal exposure in the method of Figure 7 for the cases where the wedge etalon is, respectively, correctly dimensioned, undersized and oversized;

Figures 9(A) and (B) illustrate, respectively, the images obtained with and without the use of a wedge etalon on a film mounted on a rotary body which undergoes changes in acceleration; and

Figure 10 is a schematic cross-section of apparatus for indicating changes in acceleration of a rotary body carrying on its outer surface an assembly of a film and a laminated foil package embodied in the invention.

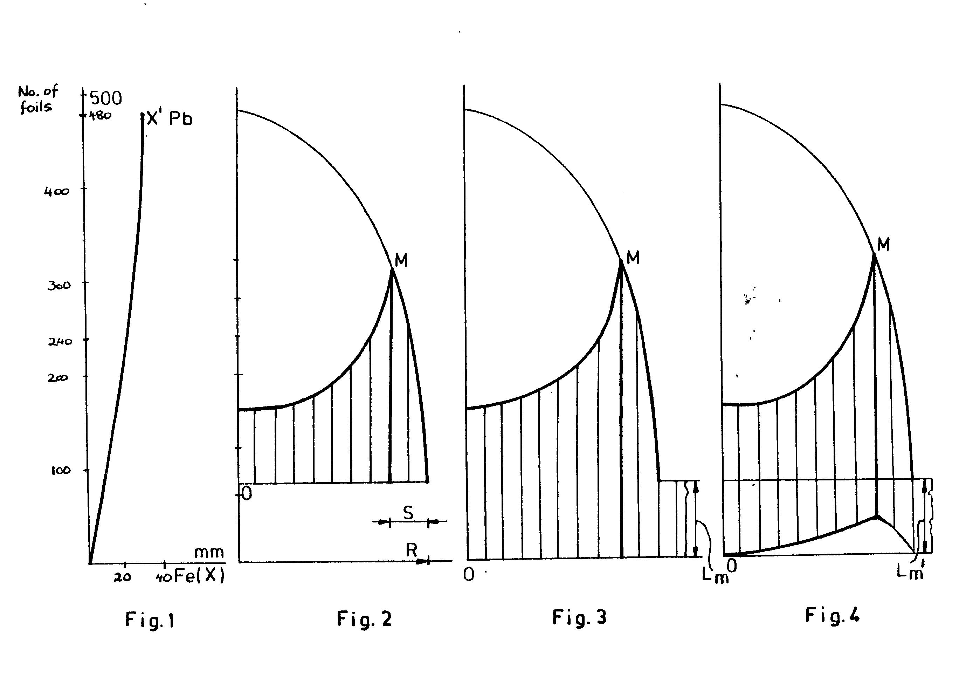

Referring to the drawings, Figure 1 is a graph illustrating the non-linear equivalents of the number of foils of lead represented on the ordinate in order to produce the same blackening as a solid piece of iron. The foils of lead were mounted on paper sheets as individual carriers. As shown in the graph, a 10 mm. thickness of iron produces the same blackening as a laminated package of 100 lead foils, 20 mm. of iron is the equivalent of not twice 100 foils but 240 foils, and 30 mm. equals not 300 foils but 480 foils. In a system reduced to practice, the corresponding data for lead and iron were in face 44, 112 and 192 foils of a given thickness.

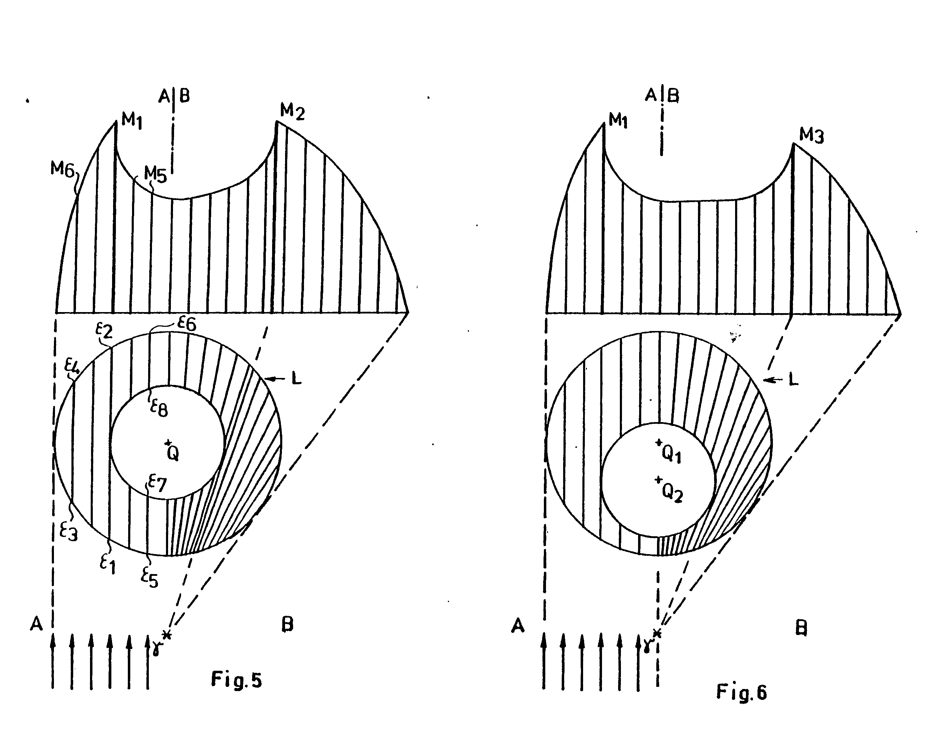

Referring now to Figures 2 to 6, Figure 2 corresponds to the upper left-hand portion of the curve shown in Figure 5 but transposed to the right-hand side of the centre of symmetry. The same curve is shown in Figure 3 but shifted upwardly, as viewed, by an amount $L_m$. The blackenings correspond to the lengths of the vertical lines. For practical reasons, a planar body is interposed between a recording film and the tube under test shown in Figure 5. This causes a change of the diagram of the blackening curves against the radial distance.

Figure 4 illustrates the surprising non-linear effect of the present invention in which a laminated array composed of a package of thin, at least partially radiation transmitting, mutually parallel metallic foils are arranged contiguously with and parallel to the film and transversely to the path of the transmitted rays, the attenuation of the package of foils having been chosen to correspond to that of the monolithic sheet used in the case of Figure 3 with no additional iron material inserted between the source and the package. Thus the blackening $L_m$ of the sheet of Figure 3 is equal to that of $L_m'$ shown in Figure 4. If the iron material of the tube is inserted into the path, the ratio of the path of the rays travelling in the actual iron of the pipe to that in the laminar array or package is varied. Given the mentioned non-linear properties of the foil package, the resulting effective blackening corresponds to the diagram of Figure 4, that is to say at the thickest point of the pipe the vertical line or blackening will be shorter than is the case for the same cross-section of Figure 3 graph.

By comparison of Figures 3 and 4 it will be seen that if one takes the maximum range of recording at the vertical line M then in Figure 4 the white area from the bottom end of the line M to the abscissa represents an extra thickness of pipe the image of which could be recorded on the same film. In other words, the application of the array of laminated metallic elements in the form of a package of thin metallic foils as mentioned above extends the possible thickness range that can be measured by a given film.

In Figures 5 and 6 E1, E2, E3 . . ., represent points on the surfaces of a pipe under test, L being the specimen or pipe under test, Q is the centre point of the pipe in Figure 5 and Q1 and Q2 represent the centre points of the eccentric pipe in Figure 6. Gamma represents the source of radiation in each Figure while $M_1$, $M_2$ ... represent intercepts or projections of the paths of the rays passing through the pipe L.

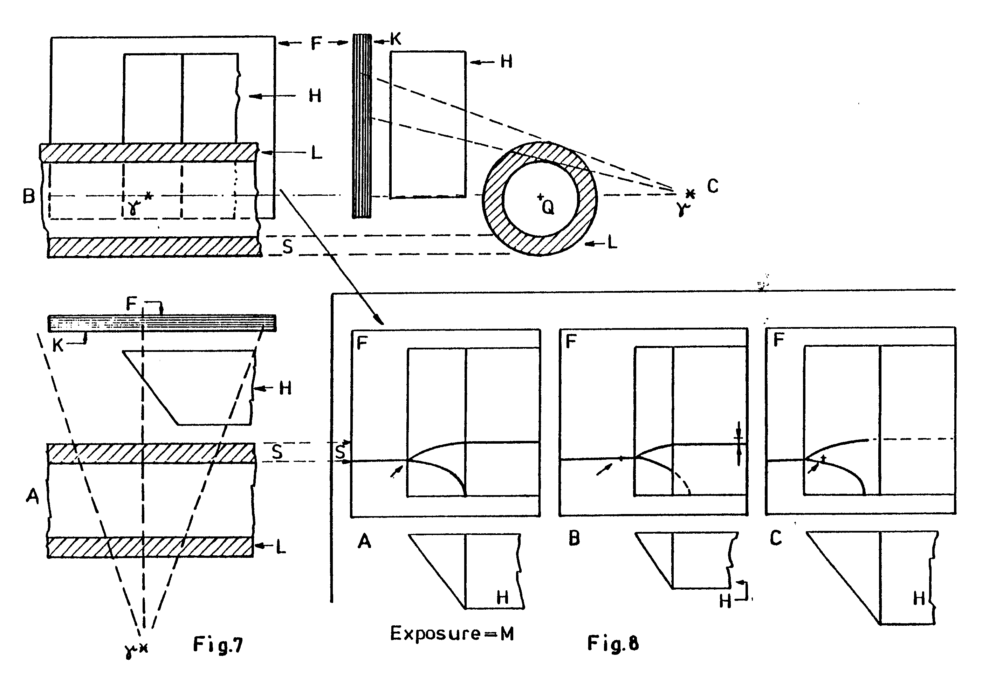

Turning now to Figures 7(A), 7(B) and 7(C) together with Figures 8(A), 8(B) and 8(C) there is shown a source γ of radiation, a pipe specimen L of wall thickness S in the path of the radiation and having a centre Q, an array K of laminated metallic foils arranged mutually in parallel as a package contiguously with a film F, and a reference wedge H partially interposed between the source and the foil package K.

When, for a given exposure M the size of the wedge H is selected correctly, the image shown in Figure 8(A) is obtained. When, however, the wedge H is either too small or too large, the images shown respectively in Figures 8(B) and 8(C) are obtained.

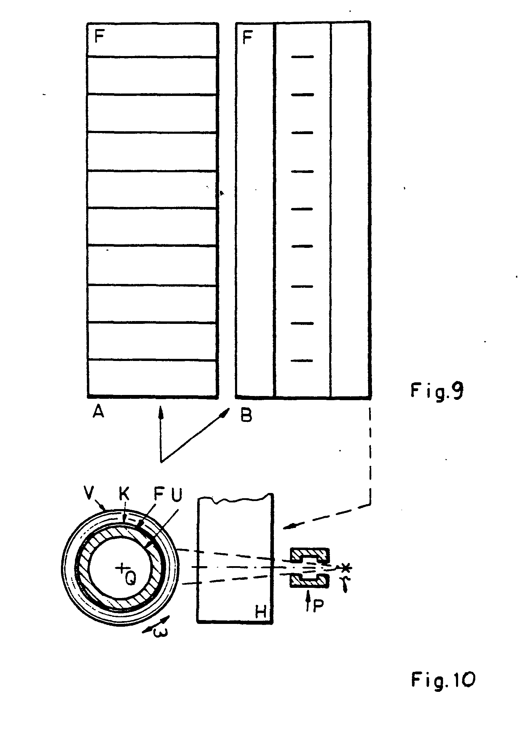

In Figures 9 and 10 there is shown radiographic apparatus and associated images on a recording film F for determining periodic unevennesses in the rotation of a shaft or other rotary body U rotating about an axis Q with an angular velocity of ω. An array of foils K arranged as a laminated package of mutually parallel (here: concentric) foils is placed around the film F which in turn is laid against the outer surface of the shaft or body U. A belt V holds the assembly comprising K and F in place. A source γ of radiation is passed through a narrow slot in a collimator P and a reference wedge H. Figures 9(A) and 9(B), obtained respectively with and without the wedge H indicate black stripes on film F.

## Claims

1. A radiographic imaging system comprising a source emitting X-rays or gamma-rays in at least one predetermined direction, for imaging a specimen (L) arranged at least partially in the path of said rays and having a shape and/or internal configuration to be tested by means of selective attenuation of said rays transmitted therethrough; the said system further comprising image detecting means (F) having a surface arranged in the path of said transmitted rays, said image detecting means (F) having a predetermined sensitivity range within which differences in the intensities of differently attenuated ones of said rays generate distinguishable responses; and an array (K) of laminated metallic elements arranged between the said image detecting means (F) and the said specimen (L), the angle of incidence on the array (K) of the said rays lying between 0° and 60°, characterised in that

the said array (K) is composed of a package of thin, at least partially radiation-transmitting, mutually parallel metallic foils arranged contiguously with and parallel to said image detecting means (F) and transversely to the path of said transmitted rays for modifying the detected image of said specimen (L) in such a non-linear way that the presence of said structure corresponds to a first equivalent material thickness of the material of the specimen (L) when said response is considered at the minimum path length of said rays in said specimen (L), and to a substantially smaller thickness when said response is considered at a maximum path length of said rays in said specimen (L).

2. A system as claimed in claim 1, characterised in that said foils are lead foils.

3. A system as claimed in claim 1 or 2, characterised in that the number of said foils in said structure (K) is between about 40 to 480.

4. A system as claimed in claims 1 to 3, characterised in that said foils have a density at least equal to that of the material of said specimen (L).

5. A system as claimed in any of claims 1 to 4, characterised in that said foils are attached to each other by means of a binding agent.

6. A system as claimed in any of claims 1 to 4, characterised in that each of said foils is mounted on a carrier sheet and the laminated carrier sheets are integrated to form said laminated structure (K).

7. A system as claimed in claim 6, characterised in that said detecting means is a recording film (F).

8. A system as claimed in any of claims 1 to 7, characterised in that it includes a compensator (H) made of a metal having at least the same density as the density of the material of the specimen (L), said compensator (H) being arranged in the path of said rays between the source and said structure (K) and said compensator (H) having a continuously varying thickness along a portion of said path.

9. A method of determining periodic discontinuities of a rotating object (U) running with a predetermined speed, comprising the steps of:

covering a circular surface of said object (U) with a film (F) sensitive to gamma-rays or X-rays,

contiguously covering said film (F) with a laminated structure (K) of a package of thin, mutually parallel metallic foils to form an assembly,

irradiating the thus obtained assembly by rays from a source of gamma rays or X-rays propagating in a direction substantially normal to the axis of rotation of said object (U) to expose said film (F) through said structure (K); and

developing said film (F).

## Patentansprüche

1. Radiographisches bildgebendes System mit einer Röntgen- oder Gammastrahlen in wenigstens einer vorgegebenen Richtung aussendenden Quelle, zum Abbilden einer Probe (L), die zumindest teilweise in der Bahn der Strahlen angeordnet ist und eine Form und/oder interne Konfiguration aufweist, die mittels selektiver Dämpfung der hindurchgesendeten Strahlen geprüft werden soll; ferner mit einer Bilderfassungseinrichtung (F), die eine in der Bahn der gesendeten Strahlen angeordnete Fläche aufweist und einen vorgegebenen Empfindlichkeitsbereich hat, innerhalb dessen Unterschiede in den Intensitäten unterschiedlich gedämpfter Strahlen unterscheidbare Reaktionen hervorrufen; und mit einer zwischen der Bilderfassungseinrichtung (F) und der Probe (L) angeordneten Gruppenanordnung (K) geschichteter metallischer Elemente, wobei der Einfallswinkel der Strahlen auf die Gruppenanordnung (K) zwischen 0° und 60° liegt,

dadurch gekennzeichnet, daß

die Gruppenanordnung (K) zusammengesetzt ist aus einer Packung dünner, zumindest teilweise strahlungsdurchlässiger, zueinander paralleler, metallischer Folien, die parallel zur Bilderfassungseinrichtung (F) an diese angrenzen und quer zu der Bahn der gesendeten Strahlen verlaufen, um das erfaßte Bild der Probe (L) in einer derart nicht-linearen Weise zu verändern, daß die Anwesenheit der Struktur (K) einer ersten äquivalenten Materialdicke des Materials der Probe (L) enspricht, wenn die Reaktion bei der kleinsten Bahnlänge der Strahlen in der Probe (L) betrachtet wird, und einer nicht unerheblich kleineren Dicke entspricht, wenn die Reaktion bei der größten Bahnlänge der Strahlen in der Probe (L) betrachtet wird.

2. System nach Anspruch 1, dadurch gekennzeichnet, daß die Folien Bleifolien sind.

3. System nach Anspruch 1 oder 2, dadurch gekennzeichnet, daß die Anzahl der Folien in der Struktur (K) zwischen etwa 40 und 480 liegt.

4. System nach einem der Ansprüche 1 bis 3, dadurch gekennzeichnet, daß die Folien eine Dichte aufweisen, die mindestens jener des Materials der Probe (L) gleich ist.

5. System nach einem der Ansprüche 1 bis 4, dadurch gekennzeichnet, daß die Folien durch ein Bindemittel aneinander befestigt sind.

6. System nach einem der Ansprüche 1 bis 4, dadurch gekennzeichnet, daß jede der Folien auf ein Trägerblatt montiert ist und die geschichteten Trägerblätter zusammengefaßt sind, um die geschichtete Struktur (K) zu bilden.

7. System nach Anspruch 6, dadurch gekennzeichnet, daß die Erfassungseinrichtung ein Aufnahmefilm (F) ist.

8. System nach einem der Ansprüche 1 bis 7, dadurch gekennzeichnet, daß es einen Kompensator (H) umfaßt, der aus einem Metall mit mindestens der gleichen Dichte wie der Dichte des Materials der Probe (L) hergestellt ist, in der Bahn der Strahlen zwischen der Quelle und der Struktur (K) angeordnet ist und entlang eines Abschnitts der Bahn eine stetig veränderliche Dicke aufweist.

9. Verfahren zum Bestimmen periodischer Unstetigkeiten eines rotierenden Objekts (U), das mit vorgegebener Geschwindigkeit umläuft, mit folgenden Schritten:

Bedecken einer kreisförmigen Fläche des Objekts (U) mit einem gegenüber Gammastrahlen oder Röntgenstrahlen empfindlichen Film (F),

anschmiegendes Bedecken des Films (F) mit einer geschichteten Struktur (K) aus einer Packung dünner, zueinander paralleler, metallischer Folien, um einen Aufbau zu bilden,

Bestrahlen des so erhaltenen Aufbaus mit Strahlen von einer Quelle von Gammastrahlen oder Röntgenstrahlen die sich in einer zur Rotationsachse des Objekts (U) im wesentlichen senkrechten Richtung ausbreiten, um den Film (F) durch die Struktur (K) hindurch den Strahlen auszusetzen; und

Entwickeln des Films (F).

**Revendications**

1. Un système imageur radiographique comprenant une source émettant des rayons X ou des rayons gamma dans au moins une direction prédéterminée, pour imager un spécimen (L) disposé au moins partiellement sur la trajectoire desdits rayons et possédant une forme et/ou une configuration interne à tester au moyen d'une atténuation sélective desdits rayons transmis à travers le spécimen, ce système comprenant en outre un moyen de détection d'image (F) présentant une surface disposée sur la trajectoire desdits rayons transmis, ledit moyen de détection d'image (F) ayant une plage de sensibilité prédéterminée dans les limites de laquelle des différences d'intensités de certains desdits rayons atténués différemment produisent des réponses différenciables; et une zone (K) d'éléments métalliques stratifiés disposés entre ledit moyen de détection d'image (F) et ledit spécimen (L), l'angle d'incidence sur la zone (K) desdits rayons se situant entre 0° et 60°, caractérisé en ce que ladite zone (K) est composée d'une enveloppe de fines feuilles métalliques parallèles transmettant au moins partiellement un rayonnement, disposées de façon adjacente avec et parallèlement audit moyen de détection d'image (F) et transversalement à la trajectoire desdits rayons émis pour modifier l'image détectée dudit spécimen (L) d'un manière non linéaire de sorte que la présence de ladite structure corresponde à une première épaisseur de matériau équivalente à celle de matériau du spécimen (L) quand ladite réponse est considérée comme étant la longueur de trajectoire minimum desdits rayons dans ledit spécimen (L) et à une épaisseur sensiblement moins importante quand ladite réponse est considérée comme étant une longueur de trajectoire maximum desdits rayons sur ledit spécimen (L).

2. Un système selon la revendication 1, caractérisé en ce que lesdites feuilles sont des feuilles de plomb.

3. Un système selon la revendication 1 ou 2, caractérisé en ce que le nombre desdites feuilles dans ladite structure (K) est compris entre environ 40 et 480.

4. Un système selon l'une quelconque des revendications 1 à 3, caractérisé en ce que lesdites feuilles ont une densité au moins égale à celle du matériau dudit spécimen (L).

5. Un système selon l'une quelconque des revendications 1 à 4, caractérisé en ce que lesdites feuilles sont liées entre elles au moyen d'un agent de liaison.

6. Un système selon l'une quelconque des revendications 1 à 4, caractérisé en ce que cha- cunes desdites feuilles est montée sur une feuille de support et en ce que les feuilles de support stratifiées sont intégrées pour former ladite structure stratifiée (K).

7. Un système selon la revendication 6, caractérisé en ce que ledit moyen de détection est un film d'enregistrement (F).

8. Un système selon l'une quelconque des revendications 1 à 7, caractérisé en ce qu'il comprend un compenseur (H) fait d'un métal ayant au moins la même densité que la densité du matériau du spécimen (L), ledit compensateur (H) étant disposé sur la trajectoire entre la source et ladite structure (K) et ledit compensateur (H) présentant une épaisseur qui varie de façon continue le long d'une partie de ladite trajectoire.

9. Un procédé pour déterminer les discontinuités d'un object en rotation (U) tournant à une vitesse déterminée, comprenant les étapes suivantes consistant à:
—couvrir une surface circulaire dudit objet (U) d'un film (F) sensible aux rayons gamma et aux rayons X,
—couvrir de façon adjacente ledit film (F) d'une structure stratifiée (K) d'une enveloppe de fines feuilles métalliques parallèles pour former un ensemble,
—irradier l'ensemble ainsi obtenu par des rayons provenant d'une source de rayons gamma ou de rayons X se propageant dans une direction sensiblement normale à l'axe de rotation dudit objet (U) pour exposer ledit film (F) à travers ladite structure (K) et développer ledit film (F).

No. of foils

500
480

X' Pb

400

300

240

200

100

20   40 Fe(X)
mm

**Fig. 1**

M

0

S

R

**Fig. 2**

M

0

L_m

**Fig. 3**

M

0

L_m'

**Fig. 4**

EP 0 128 922 B1

Fig.5

Fig.6

Exposure=M

Fig.8

Fig.7

Fig.9

Fig.10